# EUROPÄISCHE PATENTSCHRIFT

(11) **EP 2 617 549 B1**
(45) Veröffentlichungstag und Bekanntmachung des Hinweises auf die Patenterteilung: **01.06.2016**
(21) Anmeldenummer: 13000121.7
(22) Anmeldetag: 10.01.2013
(51) Int. Cl.: B29C 45/14

(54) **Verfahren und Anordnung zur Herstellung eines Faserverbund- oder Hybridbauteils**
Method and device for producing a fibre composite or hybrid component
Procédé et dispositif de fabrication d'un composant en composite de fibre ou hybride

(30) Priorität: 18.01.2012 AT 512012
(43) Veröffentlichungstag der Anmeldung: 24.07.2013
(73) Patentinhaber: ENGEL AUSTRIA GmbH, 4311 Schwertberg (AT)
(72) Erfinder: Stock, Alexander, 4020 Linz (AT); Egger, Peter, 4320 Perg (AT)
(74) Vertreter: Torggler & Hofinger Patentanwälte

(56) Entgegenhaltungen:
- DE-A1-102010 019 625
- JP-A- S5 514 284
- JP-A- S60 230 808
- US-A- 4 952 366
- US-A1- 2011 241 243
- "Anwendung einer Stanzband-Umspritzanlage", , 8. Dezember 2010 (2010-12-08), XP055061339, Gefunden im Internet: URL:http://www.ifk-automation.de/de/produk te/reel-to-reel/anwendungsbeispiele.html [gefunden am 2013-04-29]
- "Werkstückträger-Umlaufsystem für die Kunststoffverarbeitung", , 25. Oktober 2010 (2010-10-25), XP055061345, Gefunden im Internet: URL:http://www.ifk-automation.de/de/produk te/wt-umlauf/# [gefunden am 2013-04-29]

## Beschreibung

Die Erfindung betrifft ein Verfahren zur Herstellung eines Faserverbund- oder Hybridbauteils, mit den Schritten Bearbeiten eines Einlegeteils in einer Vorbereitungsstation, Transportieren des Einlegeteils mit einer Transportvorrichtung von der Vorbereitungsstation in eine Kavität einer Schließeinheit einer Spritzgießmaschine, Umspritzen des Einlegeteils mit von einer Spritzeinheit einer Spritzgießmaschine in die Kavität eingespritzter Kunststoffschmelze zu dem Faserverbund- oder Hybridbauteil und Entnehmen des Faserverbund- oder Hybridbauteils samt Einlegeteil aus der Schließeinheit durch eine Transportvorrichtung, wobei das Einlegeteil während dem Bearbeiten in der Vorbereitungsstation, während dem Transportieren zur Schließeinheit und während dem Umspritzen in der Kavität in Verbindung mit derselben Transportvorrichtung verbleibt. Zusätzlich betrifft die Erfindung eine Anordnung zur Herstellung eines Faserverbund- oder Hybridbauteils mit einer Vorbereitungsstation, in der ein Einlegeteil bearbeitbar ist, einer Schließeinheit einer Spritzgießmaschine, mit einer Kavität, in der das bearbeitete Einlegeteil anordenbar bzw. angeordnet ist, einer Spritzeinheit der Spritzgießmaschine zum Einspritzen von Kunststoffschmelze in die Kavität unter Umspritzen des in der Kavität angeordneten Einlegeteils und einer Transportvorrichtung, durch die das Einlegeteil in die Vorbereitungsstation und in die Kavität der Schließeinheit transportierbar ist, wobei das Einlegeteil während dem Bearbeiten in der Vorbereitungsstation, während dem Transportieren zur Schließeinheit und während dem Umspritzen in der Kavität in Verbindung mit derselben Transportvorrichtung verbleibt.

In den letzten Jahren hat das Herstellen von mehrkomponentigen Spritzgießteilen stark zugenommen. Insbesondere wird vermehrt nach faserverstärkten Spritzgießkomponenten nachgefragt. Dabei werden meist aus vorgefertigten bzw. vorkonsolidierten Teilen, in denen bereits eine Faserstruktur gegeben ist, sogenannte Faserverbundbauteile oder Hybridbauteile hergestellt. Diese können auch als Organobleche oder Prepregs bezeichnet werden. Die Herstellung von Faserverbund- oder Hybridbauteilen bedingt das Einbringen von Verstärkungs- oder Funktionsalisierungselementen (sogenannte Einleger bzw. Einlegeteile).

Die aus dem Stand der Technik bekannten Handlingkonzepte sind vor allem für das Einbringen dieser Einlegeteile technisch und zeitlich aufwändig. Ein Beispiel für die Herstellung solcher Verbund- oder Hybridkonstruktionen geht aus der DE 10 2010 019 625 A1 hervor. Ein weiteres Verfahren zur Herstellung eines verstärkten Composite-Produktes zeigt die WO 2009/019102 A1. Als nachteilig bei diesen Verfahren haben sich weiters der relativ große Aufwand bei der Herstellung und der große Platzbedarf für die benötigten Handlingroboter herausgestellt. Zudem kann durch das Angreifen der Einlegeteile mit den Handlingrobotern eine ungewünschte Verformung oder sogar das Zerstören der Gewebestruktur bzw. Faserstruktur erfolgen.

Die JP 55-024284 zeigt eine Herstellungsmethode für Synthetikharzmaterial. Dabei wird ein Schichtmaterial von einer Rolle abgerollt und direkt ohne Vorbereitungsstation zwischen Formhälften geführt. Dort wird dann Spritzgießmaterial eingespritzt und nach dem Auskühlen geöffnet. Danach folgt noch ein Ausschneiden mit dem Schneidgerät. Das übriggebliebene Material wird dann wieder aufgerollt.

Die JP 60-230808 zeigt die Verbindung eines Bandes über Halter mit einem Träger. Dabei bildet das Band selbst das Einlegeteil mit. Eine Vorbereitungsstation wird hierin nicht erwähnt.

Die US 2011/0241243 A1 zeigt ein System und eine Methode zur Produktion von Spritzgießartikeln, wobei ein schichtförmiges Einlegematerial (insert tape) zwischen den Formhälften umspritzt wird. Als Vorbereitungsschritte können die verschiedenen Schichten des Einlegematerials kombiniert, laminiert, geschnitten, gekürzt, gedruckt oder markiert werden. Danach wird das Einlegeteil in die Kavität zwischen die Formhälften eingebracht. Anschließend wird eingespritzt (overmolding). Danach wird das Einlegeteil weitertransportiert, wonach noch eine Nachbearbeitung mittels Reinigung und Zuschneiden erfolgt. Anschließend wird das Teil auf das Endprodukt aufgebracht.

Eine gattungsfremde Anlage - das heißt eine Anlage ohne durchgehende Transportvorrichtung - geht aus der US 4,952,366 hervor.

Die Aufgabe der vorliegenden Erfindung besteht daher darin, ein gegenüber dem Stand der Technik verbessertes Verfahren bzw. eine verbesserte Anordnung zu schaffen. Insbesondere soll eine vereinfachte Herstellung eines Faserverbund- oder Hybridbauteils erreicht werden, bei der die Einlegeteile möglichst exakt und unbeeinflusst bewegt werden.

Dies wird für ein Verfahren mit den Merkmalen des Oberbegriffs von Anspruch 1 und für eine Anordnung mit den Merkmalen des Oberbegriffs von Anspruch 5 dadurch erreicht, dass die Transportvorrichtung neben der Spritzgießmaschine mit Schließeinheit und Spritzeinheit auch die Vorbereitungsstation durchläuft und dass die Vorbereitungsstation eine Heizeinrichtung aufweist, durch die das Einlegeteil erwärmt wird bzw. erwärmbar ist. Somit hat die vorliegende Erfindung den besonderen Vorteil, dass durch das Verbleiben des Einlegeteils an der Transportvorrichtung das flexibler und instabiler werdende Einlegeteil dennoch sicher und wie gewünscht an der Transportvorrichtung gehalten bleibt und somit in der gewünschten Form von der Vorbereitungsstation in die Schließeinheit gelangt.

Durch die vorliegende Erfindung wird zudem ein durchgehendes Handlingkonzept - ohne Übergaben oder weite Verfahrenswege - ermöglicht und es wird die Zykluszeit zur Herstellung der Faserverbund- oder Hybridbauteile erheblich verkürzt. Somit muss kein Umgreifen durch verschiedene Handlingroboter erfolgen, sondern das Einlegeteil bleibt immer an der Transportvorrichtung befestigt oder liegt auf dieser auf. Die Transportvorrichtung bildet somit ein Fördersystem für den Transport von vorgelegten, partiell oder vollflächig aufgebrachten, konsolidierten oder unkonsolidierten 2D- und/oder 3D-Textilstrukturen (Einlegeteile). Mit anderen Worten führt die Transportvorrichtung sowohl durch die Vorbereitungsstation als auch durch die Schließeinheit hindurch und bildet somit die Basis für eine Fertigungsstraße zur Herstellung eines Faserverbund- oder Hybridbauteils. Aufbauend auf der Idee der Fertigungsstraße durchläuft die Transportvorrichtung mit seinem Transportgut (Einleger) sämtliche Prozessschritte der Fertigung des Faserverbund- oder Hybridbauteils, die aus zumindest zwei Komponenten bestehen, von denen mindestens eine Komponente von außen in die eigentliche Verfahrenseinheit eingebracht werden muss. Diese Komponente wird mit der Transportvorrichtung transportiert.

Bevorzugt kann vorgesehen sein, dass die Transportvorrichtung ein Förderband aufweist, über das das Einlegeteil transportiert wird. Dabei kann das Einlegeteil unbefestigt bzw. lose auf dem Förderband aufliegen. Bevorzugt ist das Einlegeteil jedoch direkt mit dem Förderband verbunden. Es kann aber auch vorgesehen sein, dass das Einlegeteil über einen Träger oder Greifer am Förderband befestigbar ist. Die Verbindung zwischen dem Einleger und der Transportvorrichtung kann bevorzugt formschlüssig, stoffschlüssig oder kraftschlüssig ausgebildet sein.

Für eine effiziente Ausbildung der Transportvorrichtung kann vorgesehen sein, dass das Förderband umlaufend ausgebildet ist. Diese umlaufende Komponente der Fördereinrichtung kann entweder zweiteilig oder einteilig sein. Die Einleger können direkt mit der Fördereinrichtung verbunden sein oder auf einen Träger aufgebracht werden, der gefördert wird oder der selbst die Fördereinrichtung ist. Im letzten Fall müsste der Träger, der ja gleichzeitig die Transportvorrichtung bildet, wieder von den aufgebrachten Zusatzkomponenten (zweites Einlegeteil) bzw. vom fertigen Bauteil getrennt werden oder durch Abschneiden von der restlichen durch das Einlegeteil gebildeten Transportvorrichtung im Bauteil belassen werden. Wenn die Transportvorrichtung eine verformbare Folie ist, kann diese nach dem Einziehen und Umformen der Textilverstärkungsstrukturen auch bis zur Formgebung im Werkzeug oder auch im Bauteil verbleiben.

Das Transportsystem durchläuft neben der eigentlichen Verfahrenseinheit (Spritzgießmaschine mit Schließeinheit und Spritzeinheit) auch eine Vorbereitungsstation und vorzugsweise auch eine Nachbearbeitungsstation. Je nach herzustellendem Bauteil und eingesetztem Prozess werden hier zusätzliche Arbeitsschritte durchgeführt. Die Zuführung kann dabei horizontal oder vertikal erfolgen. Ebenso kann es sich um eine horizontale oder vertikale Schließeinheit handeln. Natürlich sind auch Zwischenlagen (z.B. 45° oder 30°) denkbar. Grundsätzlich kann die Bestückung der Kavität im Werkzeug auch außerhalb der Schließachse der Schließeinheit der Spritzgießmaschine erfolgen. Dazu kann das Werkzeug aus dem Bereich der Schließeinheit ausgefahren werden.

Verfahrensschritte, die in der Vorbereitungsstation zusätzlich zum Aufheizen des Einlegeteils durchgeführt werden können, sind Einlegen des Einlegeteils, Bestücken des Einlegeteils mit einer Zusatzkomponente, Trocknen des Einlegeteils, Imprägnieren des Einlegeteils, Bindern und/oder Aufsprühen eines Klebers, etc. Für die Herstellung von faserverstärkten Hybridbauteilen ist besonders bevorzugt vorgesehen, dass durch die Heizeinrichtung das, vorzugsweise vorkonsolidierte, Einlegeteil erweichbar ist.

Um eine multifunktional einsetzbare Anordnung bzw. ein möglichst komplettes Verfahren zur Herstellung eines Faserverbund- oder Hybridbauteils zu erreichen, ist bevorzugt eine Nachbearbeitungsstation zum Bearbeiten des Faserverbund- oder Hybridbauteils nach dem Umspritzen des Einlegeteils mit Kunststoffschmelze, wobei das Einlegeteil auch in der Nachbearbeitungsstation in Verbindung mit der Transportvorrichtung verbleibt, vorgesehen. Die Nachbearbeitungsschritte, die hier durchgeführt werden können, sind Beschneiden, Kühlen, Trocknen und/oder Entgraten, etc.

Als Einlegeteil kann eine 2D- oder 3D-Textilstruktur dienen, die vollflächig oder partiell auf die Transportvorrichtung aufgelegt wird. Beispielsweise können solche Textilstrukturen als Monofilamentgarn, Multifilamentgarn, beschichtetes Garn, Zwirn, umsponnenes Garn, Friktionsspinngarn, Umwindegarn mit zentraler Verstärkungsfaser (z. B. Glasfaser), Gewebe, biaxiales Gelege, multiaxiales Gelege, 3D-Geflecht, Rundgeflecht, triaxiales Rundgelege, Abstands- oder Konturengewirke, Vlies oder Ähnliches ausgebildet sein. Die für die Herstellung der Textilstrukturen verwendeten Fasern können Glasfasern, Kohlestofffasern, Basaltfasern, Aramidfasern, Polymerfasern oder auch Hybridgarne (Glas- und Thermoplastfasern) sein. Einlegeteile können aber auch konsolidierte Halbzeuge (Organobleche, Tapes, Prepregs usw.) von Faserverbundstoffen sein.

Für die Infiltratrion und Imprägnierung von unkonsolidierten Textilstrukturen werden Harze (RTM - Resin Transfer Moulding) oder niedrigviskose reaktive Polymersubstanzen (RIM - Reaction Injection Moulding, Insitu-Polymerisation von PA) eingesetzt. Für das Umspritzen und Aufspritzen von Funktionselementen auf konsolidierte Halbzeuge werden Spritzaggregate für die Einspritzung von Thermoplastschmelzen verwendet. Als eingebrachte bzw. eingespritzte Kunststoffkomponenten (können auch als Ausgangskomponenten bezeichnet werden) im Sinne der Erfindung können somit Harze, reaktive Polymersubstanzen und Thermoplastschmelzen bzw. Kunststoffschmelzen verstanden werden.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1: schematisch eine Anordnung mit Schließeinheit, Spritzeinheit, Vorbereitungsstation und Transportvorrichtung,
- Fig. 2: eine Anordnung mit einer Transportvorrichtung samt Förderband,
- Fig. 3: eine Anordnung mit einer vom Einlegeteil selbst gebildeten Transportvorrichtung und
- Fig. 4: direkt mit dem Förderband verbundene Einlegeteile.

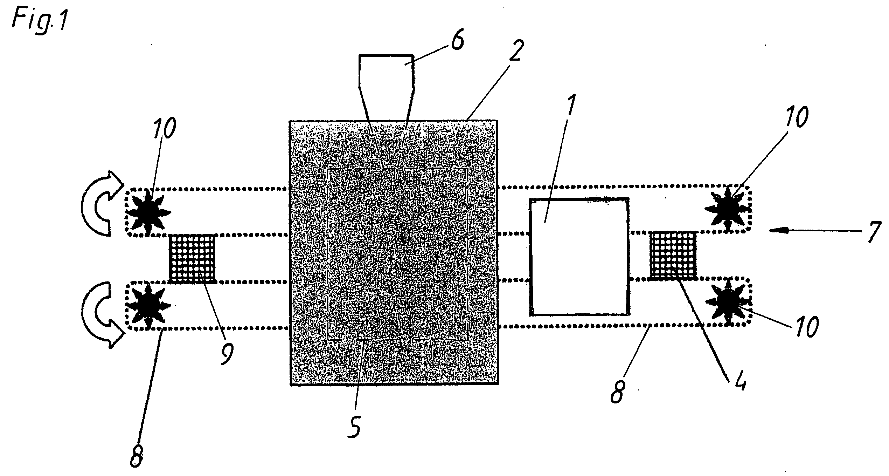

Fig. 1 zeigt die wesentlichen Komponenten zur Durchführung eines Verfahrens zur Herstellung eines Faserverbund- oder Hybridbauteiles 9. Dabei führt die Transportvorrichtung 7 einerseits durch die Vorbereitungsstation 1 und andererseits durch die Schließeinheit 2. Diese Transportvorrichtung 7 weist zwei Förderbänder 8 auf, die durch Antriebsvorrichtungen 10 angetrieben werden. Zwischen den beiden Förderbändern 8 wird vor oder bei Erreichen der Vorbereitungsstation 1 ein Einlegeteil 4 eingespannt bzw. befestigt. Dieses vorkonsolidierte und ein Gewebe oder eine Faserstruktur (z.B. mit Endlosglasfaser) aufweisende Einlegeteil 4 gelangt durch Bewegung des Förderbandes 8 in die Vorbereitungsstation 1. In dieser Vorbereitungsstation 1 ist eine Heizeinrichtung vorgesehen, die das Einlegeteil 4 erwärmt und dadurch erweicht. Dies kann zusätzlich durch Druck erfolgen. In weiterer Folge gelangt das immer noch an der Transportvorrichtung 7 verbliebene Einlegeteil 4 in die Schließeinheit 2, in dessen Werkzeug eine Kavität 5 ausgebildet ist. Durch Einspritzen von Kunststoffschmelze über die Spritzeinheit 6 in die Kavität 5 wird das Faserverbund- oder Hybridbauteil 9 gebildet. Bei Einspritzen eines Thermoplastes wird dies durch Auskühlen gebildet oder bei Einspritzen eines Duroplasten wird das Faserverbund- oder Hybridbauteil 9 durch Ausreagieren fertiggestellt. Nach dem Weiterverfahren des immer noch an der Transportvorrichtung 7 verbliebenen Einlegeteils 4 bzw. Faserverbund- oder Hybridbauteils 9 gelangt dieses an das Ende der Fertigungsstraße, wo es entnommen werden kann oder entsprechend weiterverarbeitet bzw. gelagert wird.

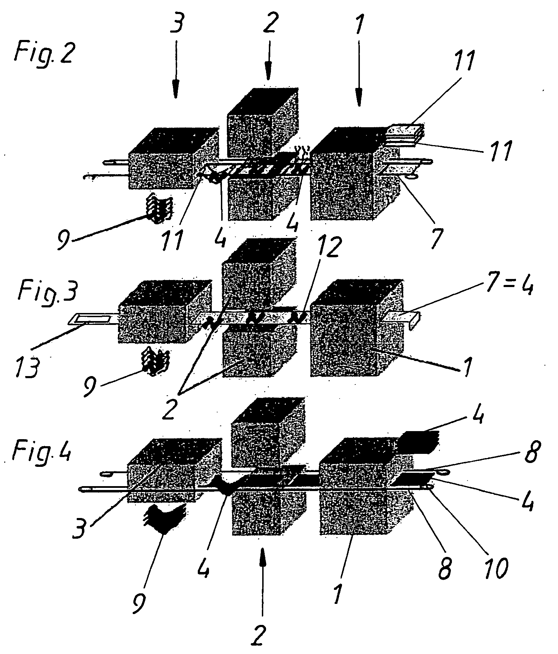

Fig. 2 zeigt schematisch eine Anordnung mit einer Vorbereitungsstation 1, einer Schließeinheit 2 und einer Nachbearbeitungsstation 3. Bei dieser Ausführung besteht die Transportvorrichtung 7 aus zwei beidseitigen Förderbändern 8, zwischen die ein Träger 11 eingespannt wird. Auf diesem Träger 11 wird in der Vorbereitungsstation 1 ein Einlegeteil 4 aufgebracht und aufgewärmt. Danach gelangt das erwärmte und auf dem Träger 11 aufliegende Einlegeteil 4 in die Schließeinheit 2, wo es umspritzt wird. In weiterer Folge erfolgt noch eine Nachbearbeitung z.B. durch Kühlen in der Nachbearbeitungsstation 3, wonach die hergestellten Faserverbund- oder Hybridbauteile 9 abgelegt bzw. gestapelt werden können.

In Fig. 3 bildet das Einlegeteil 4 selbst die Transportvorrichtung 7 und wird z.B. von einer hier nicht dargestellten Rolle bahnförmig durch die Vorbereitungsstation 1, Schließeinheit 2 und Nachbearbeitungsstation 3 geführt. Im Bereich der Vorbereitungsstation 1 wird eine Zusatzkomponente 12 (z.B. metallischer Verstärker) aufgelegt und das bahnförmige Einlegeteil 4 gelangt samt Zusatzkomponente 12 in die Kavität 5 der vertikalen Schließeinheit 2. In der Nachbearbeitungsstation 3 wird schließlich der umspritzte Bereich aus der Bahn des Einlegeteils 4 samt Zusatzkomponente 12 ausgestanzt, wodurch das Loch 13 in der Transportvorrichtung 7 entsteht.

In Fig. 4 wird das Einlegeteil 4 direkt an den Förderbändern 8 der Transportvorrichtung 7 befestigt. Die Förderbänder 8 bilden somit eine Art Einspannrahmen für die Einlegeteile 4. Durch die Antriebsvorrichtung 10 wird die Transportvorrichtung 7 bewegt und die Einlegeteile 4 gelangen zu ihrer Bearbeitung nacheinander in die Vorbereitungsstation 1, Schließeinheit 2 und in die Nachbearbeitungsstation 3.

Durch die vorliegende Erfindung ist somit ein verbessertes Verfahren und eine verbesserte Anordnung zur Herstellung eines Faserverbund- oder Hybridbauteils 9 geschaffen, wobei der technische und zeitliche Aufwand gegenüber dem Stand der Technik dadurch verringert wird, dass eine Komponente (Einlegeteil 4 oder Zusatzkomponente 12) des herzustellenden Faserverbund- oder Hybridbauteils 9 während des Herstellungsprozesses immer an der Transportvorrichtung 7 befestigt ist oder auf dieser aufliegt. Es müssen somit keine umständlichen, aufwändigen und beschädigungsanfälligen Übergaben des Einlegeteils 4 zwischen den einzelnen Stationen 1, 2 und/oder 3 des Herstellungsprozesses erfolgen.

## Patentansprüche

1. Verfahren zur Herstellung eines Faserverbund- oder Hybridbauteils (9), mit den Schritten:
o Bearbeiten eines Einlegeteils (4) in einer Vorbereitungsstation (1),
o Transportieren des Einlegeteils (4) mit einer Transportvorrichtung (7) von der Vorbereitungsstation (1) in eine Kavität (5) einer Schließeinheit (2) einer Spritzgießmaschine,
o Umspritzen des Einlegeteils (4) mit einer von einer Spritzeinheit (6) einer Spritzgießmaschine in die Kavität (5) eingebrachter Kunststoffkomponente, vorzugsweise Kunststoffschmelze, zu dem Faserverbund- oder Hybridbauteil (9),
o Entnehmen des Faserverbund- oder Hybridbauteils (9) samt Einlegeteil (4) durch eine Transportvorrichtung (7) aus der Schließeinheit (2),
wobei das Einlegeteil (4) während dem Bearbeiten in der Vorbereitungsstation (1), während dem Transportieren zur Schließeinheit (2) und während dem Umspritzen in der Kavität (5) in Verbindung mit derselben Transportvorrichtung (7) verbleibt, **dadurch gekennzeichnet, dass** die Transportvorrichtung (7) neben der Spritzgießmaschine mit Schließeinheit (2) und Spritzeinheit (6) auch die Vorbereitungsstation (1) durchläuft und dass die Vorbereitungsstation (1) eine Heizeinrichtung aufweist, durch die das Einlegeteil (4) erwärmt wird.

2. Verfahren nach Anspruch 1, **dadurch gekennzeichnet, dass** die Transportvorrichtung (7) ein Förderband (8) aufweist, über das das Einlegeteil (4) transportiert wird.

3. Verfahren nach Anspruch 1 oder 2, **dadurch gekennzeichnet, dass** durch die Heizeinrichtung das, vorzugsweise vorkonsolidierte, Einlegeteil (4) erweicht wird.

4. Verfahren nach einem der Ansprüche 1 bis 3, **dadurch gekennzeichnet, dass** in einer Nachbearbeitungsstation (3) das Faserverbund- oder Hybridbauteil (9) nach dem Umspritzen des Einlegeteils (4) mit Kunststoffschmelze bearbeitet wird, wobei das Einlegeteil (4) auch in der Nachbearbeitungsstation (3) in Verbindung mit der Transportvorrichtung (7) verbleibt.

5. Anordnung zur Herstellung eines Faserverbund- oder Hybridbauteils (9), insbesondere zum Durchführen eines Verfahrens nach einem der Ansprüche 1 bis 4, mit
o einer Vorbereitungsstation (1), in der ein Einlegeteil (4) bearbeitbar ist,
o einer Schließeinheit (2) einer Spritzgießmaschine, mit einer Kavität (5), in der das bearbeitete Einlegeteil (4) anordenbar bzw. angeordnet ist,
o einer Spritzeinheit (6) der Spritzgießmaschine zum Einspritzen einer Kunststoffkomponente, vorzugsweise von Kunststoffschmelze, in die Kavität (5) unter Umspritzen des in der Kavität (5) angeordneten Einlegeteils (4),
o einer Transportvorrichtung (7), durch die das Einlegeteil (4) in die Vorbereitungsstation (1) und in die Kavität (5) der Schließeinheit (2) transportierbar ist,
wobei das Einlegeteil (4) beim Bearbeiten in der Vorbereitungsstation (1), beim Transportieren zur Schließeinheit (2) und beim Umspritzen durch die Kunststoffschmelze in Verbindung mit derselben Transportvorrichtung (7) steht, **dadurch gekennzeichnet, dass** die Transportvorrichtung (7) neben der Spritzgießmaschine mit Schließeinheit (2) und Spritzeinheit (6) auch die Vorbereitungsstation (1) durchläuft und dass die Vorbereitungsstation (1) eine Heizeinrichtung aufweist, durch die das Einlegeteil (4) erwärmbar ist.

6. Anordnung nach Anspruch 5, **dadurch gekennzeichnet, dass** die Transportvorrichtung (7) ein Förderband (8) aufweist, von dem das Einlegeteil (4) transportierbar ist.

7. Anordnung nach Anspruch 6, **dadurch gekennzeichnet, dass** das Einlegeteil (4) direkt mit dem Förderband (8) verbunden ist.

8. Anordnung nach Anspruch 6, **dadurch gekennzeichnet, dass** das Einlegeteil (4) über einen Träger (11) oder Greifer am Förderband (8) befestigbar ist.

9. Anordnung nach einem der Ansprüche 6 bis 8, **dadurch gekennzeichnet, dass** das Förderband (8) umlaufend ausgebildet ist.

10. Anordnung nach Anspruch 6, **dadurch gekennzeichnet, dass** das Förderband (8) selbst teilweise die Transportvorrichtung (7) und teilweise das Einlegeteil (4) bildet.

11. Anordnung nach einem der Ansprüche 5 bis 10, **dadurch gekennzeichnet, dass** durch die Heizeinrichtung das, vorzugsweise vorkonsolidierte, Einlegeteil (4) erweichbar ist.

12. Anordnung nach einem der Ansprüche 5 bis 11, **gekennzeichnet durch** eine Nachbearbeitungsstation (3) zum Bearbeiten des Faserverbund- oder Hybridbauteils (9) nach dem Umspritzen des Einlegeteils (4) mit Kunststoffschmelze, wobei das Einlegeteil (4) in der Nachbearbeitungsstation (3) in Verbindung mit der Transportvorrichtung (7) steht.

## Claims

1. A process for the production of a fiber composite or hybrid component comprising the steps:
- processing an insert portion (4) in a preparation station (1),
- transporting the insert portion (4) with a transport device (7) from the preparation station (1) into a cavity (5) of a closing unit (2) of an injection molding machine,
- injecting around the insert portion (4) with a plastic component, preferably a molten plastic material, which is introduced into the cavity (5) by an injection unit (6) of an injection molding machine, to give the fiber composite or hybrid component (9), and
- removing the fiber composite or hybrid component (9) together with insert portion (4) from the closing unit (2) by a transport device (7),
wherein the insert portion (4) stays in connected relationship with the same transport device (7) when processing in the preparation station (1), when transporting to the closing unit (2) and when injecting therearound in the cavity (5), **characterized in that** besides the injection molding machine with closing unit (2) and injection unit (6) the transport device (7) also passes through the preparation station (1) and that the preparation station (1) has a heating device by way of which the insert portion (4) is warmed.

2. A process as set forth in claim 1 **characterized in that** the transport device (7) has a conveyor belt (8) by way of which the insert portion (4) is transported.

3. A process as set forth in claim 1 or claim 2 **characterized in that** by way of the heating device the preferably pre-consolidated insert portion (4) is softened.

4. A process as set forth in one of claims 1 through 3 **characterized in that** in a post-processing station (3) the fiber composite or hybrid component (9) is processed after the step of injecting around the insert portion (4) with molten plastic material, wherein the insert portion (4) also remains in connected relationship with the transport device (7) in the post-processing station (3).

5. An arrangement for the production of a fiber composite or hybrid component (9), in particular for carrying out a process as set forth in one of claims 1 through 4, comprising
- a preparation station (1) in which an insert portion (4) can be processed,
- a closing unit (2) of an injection molding machine, having a cavity (5) in which the processed insert portion (4) is or can be arranged,
- an injection unit (6) of the injection molding machine for the injection of a plastic component, preferably molten plastic material, into the cavity (5), with injection thereof around the insert portion (4) arranged in the cavity (5), and
- a transport device (7) by which the insert portion (4) can be transported into the preparation station (1) and into the cavity (5) of the closing unit (2),
wherein the insert portion (4) stays in connected relationship with the transport device (7) when processing in the preparation station (1), when transport to the closing unit (2) and when injecting therearound with the molten plastic material, **characterized in that** besides the injection molding machine with closing unit (2) and injection unit (6) the transport device (7) also passes through the preparation station (1) and that the preparation station (1) has a heating device by way of which the insert portion (4) can be warmed.

6. An arrangement as set forth in claim 5 **characterized in that** the transport device (7) has a conveyor belt (8) by way of which the insert portion (4) is transported.

7. An arrangement as set forth in claim 6 **characterized in that** the insert portion (4) is connected directly to the conveyor belt (8).

8. An arrangement as set forth in claim 6 **characterized in that** the insert portion (4) can be fixed to the conveyor belt (8) by way of a carrier (11) or gripper.

9. An arrangement as set forth in one of claim 6 through 8 **characterized in that** the conveyor belt (8) is adapted to circulate.

10. An arrangement as set forth in claim 6 **characterized in that** the conveyor belt (8) itself forms the insert portion (4).

11. An arrangement as set forth in one of claims 5 through 10 **characterized in that** by the heating device the preferably pre-consolidated insert portion (4) can be softened.

12. An arrangement as set forth in one of claims 5 through 11 **characterized by** a post-processing station (3) for processing the fiber composite or hybrid component (9) after injection around the insert portion (4) with molten plastic material, wherein the insert portion (4) stays in connected relationship with the transport device (7) in the post-processing station (3).

## Revendications

1. Procédé de fabrication d'un composant en composite de fibre ou hybride (9), avec les étapes de :
º traitement d'une pièce d'insertion (4) dans une station de préparation (1),
º transport de la pièce d'insertion (4) avec un dispositif de transport (7) de la station de préparation (1) dans une cavité (5) d'une unité de fermeture (2) d'une machine de moulage par injection,
º extrusion de la pièce d'insertion (4) avec un composant en matière synthétique, de préférence une matière synthétique fondue, introduit dans la cavité (5) par une unité d'injection (6) d'une machine de moulage par injection, en un composant en composite de fibre ou hybride (9),
º retrait, de l'unité de fermeture (2), du composant en composite de fibre ou hybride (9) avec la pièce d'insertion (4) par un dispositif de transport (7),
dans lequel la pièce d'insertion (4) pendant le traitement dans la station de préparation (1), pendant le transport vers l'unité de fermeture (2) et pendant l'extrusion dans la cavité (5), reste en liaison avec le même dispositif de transport (7), **caractérisé en ce que** le dispositif de transport (7) traverse, outre la machine de moulage par injection avec unité de fermeture (2) et unité d'injection (6), également la station de préparation (1) et **en ce que** la station de préparation (1) présente un dispositif de chauffage par lequel la pièce d'insertion (4) est chauffée.

2. Procédé selon la revendication 1, **caractérisé en ce que** le dispositif de transport (7) présente une bande transporteuse (8) sur laquelle la pièce d'insertion (4) est transportée.

3. Procédé selon la revendication 1 ou 2, **caractérisé en ce que** la pièce d'insertion (4), de préférence pré-consolidée, est ramollie par le dispositif de chauffage.

4. Procédé selon l'une des revendications 1 à 3, **caractérisé en ce que** dans une station de post-traitement (3) le composant en composite de fibre ou hybride (9) est traité après l'extrusion de la pièce d'insertion (4) avec une matière synthétique fondue, la pièce d'insertion (4) restant aussi dans la station de post-traitement (3) en liaison avec le dispositif de transport (7).

5. Dispositif de fabrication d'un composant en composite de fibre ou hybride (9), en particulier pour mettre en oeuvre un procédé selon l'une des revendications 1 à 4, avec
º une station de traitement (1), dans laquelle peut être traitée une pièce d'insertion (4),
º une unité de fermeture (2) d'une machine de moulage par injection, avec une cavité (5), dans laquelle la pièce d'insertion traitée (4) peut être agencée ou est agencée,
º une unité d'injection (6) de la machine de moulage par injection pour injecter un composant en matière synthétique, de préférence une matière synthétique fondue, dans la cavité (5) par extrusion de la pièce d'insertion (4) disposée dans la cavité (5), º un dispositif de transport (7), par lequel la pièce d'insertion (4) peut être transportée dans la station de préparation (1) et dans la cavité (5) de l'unité de fermeture (2), dans lequel la pièce d'insertion (4) lors du traitement dans la station de préparation (1), lors du transport vers l'unité de fermeture (2) et lors de l'extrusion par la matière synthétique fondue, reste en liaison avec le même dispositif de transport (7), **caractérisé en ce que** le dispositif de transport (7) traverse, outre la machine de moulage par injection avec unité de fermeture (2) et unité d'injection (6), également la station de préparation (1) et **en ce que** la station de préparation (1) présente un dispositif de chauffage par lequel la pièce d'insertion (4) peut être chauffée.

6. Dispositif selon la revendication 5, **caractérisé en ce que** le dispositif de transport (7) présente une bande transporteuse (8), par laquelle la pièce d'insertion (4) peut être transportée.

7. Dispositif selon la revendication 6, **caractérisé en ce que** la pièce d'insertion (4) est reliée directement à la bande transporteuse (8).

8. Dispositif selon la revendication 6, **caractérisé en ce que** la pièce d'insertion (4) peut être fixée par un support (11) ou crampon à la bande transporteuse (8).

9. Dispositif selon l'une des revendications 6 à 8, **caractérisé en ce que** la bande transporteuse (8) est conçue circulante.

10. Dispositif selon la revendication 6, **caractérisé en ce que** la bande transporteuse (8) forme elle-même en partie le dispositif de transport (7) et en partie la pièce d'insertion (4).

11. Dispositif selon l'une des revendications 5 à 10, **caractérisée en ce que** la pièce d'insertion (4), de préférence pré-consolidée, peut être ramollie par le dispositif de chauffage.

12. Dispositif selon l'une des revendications 5 à 11, **caractérisé par** une station de post-traitement (3) pour traiter le composant en composite de fibre ou hybride (9) après l'extrusion de la pièce d'insertion (4) avec la matière synthétique fondue, dans lequel la pièce d'insertion (4) dans la station de post-traitement (3) se trouve en liaison avec le dispositif de transport (7).
